# EUROPÄISCHE PATENTANMELDUNG

(11) **EP 0 585 630 A1**
(43) Veröffentlichungstag der Anmeldung: **09.03.1994**
(21) Anmeldenummer: 93112379.8
(22) Anmeldetag: 03.08.1993
(51) Int. Cl.: B29C 45/17, B29C 45/67

(54) **Spritzgiessmachine**

(30) Priorität: 18.08.1992 AT 1663/92
(71) Anmelder: Engel Maschinenbau Gesellschaft m.b.H., A-4311 Schwertberg (AT)
(72) Erfinder: Urbanek, Otto, A-4020 Linz (AT); Leonhartsberger, Heinrich, A-4311 Schwertberg (AT); Kappelmüller, Werner, A-4311 Schwertberg (AT)
(74) Vertreter: Hofinger, Engelbert, DDr.

(57) **Zusammenfassung**

Eine Spritzgießmaschine mit einer feststehenden und einer bewegbaren Formträgerplatte (1, 2), sowie einer einen Schließmechanismus tragenden Zylinderplatte (3). An der Zylinderplatte (3) ist die bewegbare Formtragerplatte abgestützt. Die Zylinderplatte (3) und die feststehende Formträgerplatte (1) sind jeweils an einem Arm (6', 7') eines zweiarmigen Hebels montiert. Die zweiarmigen Hebel sind mittels der außerhalb der Formträgerplatte (1, 2) angeordneten Zugstreben (8) verbunden. Zwischen den anderen Armen (6'', 7'') der zweiarmigen Hebel, vorzugsweise bei deren Enden, ist mindestens eine Druckstrebe (11) angeordnet, die der Kraft des Schließmechanismus (4) entgegenwirkt. Die zweiarmigen Hebel werden von jeweils zwei zueinander parallelen Endplatten (6, 7) gebildet, die sich im Abstand voneinander befinden und zwischen denen an der Einspritzseite der Plastifizierzylinder und an der Schließseite der Schließmechanismus (4) angeordnet ist.

## Beschreibung

Die Erfindung bezieht sich auf eine Spritzgießmaschine mit einer feststehenden und einer bewegbaren Formträgerplatte, sowie einer einen hydraulischen, elektromechanischen oder hydraulisch-mechanischen Schließmechanismus tragenden Zylinderplatte, an der die bewegbare Formträgerplatte abgestützt ist, wobei die Zylinderplatte und die feststehende Formträgerplatte über Zugstreben verbunden sind.

Bei herkömmlichen Spritzgießmaschinen werden die feststehende Formträgerplatte und die Stirnplatte über vier Holme verbunden, die ein Rechteck abgrenzen und auf denen die bewegliche Formträgerplatte verfahrbar ist. Die während des Schließvorganges und des Einspritzvorganges auftretenden Kräfte werden über die Holme abgeleitet.

Aus der EU-B1-0 311 133 ist eine holmlose Spritzgießmaschine bekannt, bei der die Stirnplatte und die feststehende Formträgerplatte über einen Maschinenrahmen verbunden sind, so daß die während des Schließvorganges auftretende Schließkraft und die durch das Einspritzen auftretende Auftreibkraft zwischen der Stirnplatte und der feststehenden Formträgerplatte nur über den Maschinenrahmen abgeleitet werden. Eine derartige Spritzgießmaschine bietet eine sehr gute Zugänglichkeit zum Werkzeug und macht einen einfachen Werkzeugwechsel möglich.

Aufgabe der Erfindung ist es, eine holmlose Spritzgießmaschine zu schaffen, bei der auf einen schweren Gußrahmen verzichtet werden kann. Dabei soll eine bessere Ableitung der Kräfte erzielt werden.

Die erfindungsgemäße Aufgabe wird dadurch gelöst, daß die Zylinderplatte und die feststehende Formträgerplatte jeweils an einem Arm eines zweiarmigen Hebels montiert sind, daß die zweiarmigen Hebel mittels der außerhalb der Formträgerplatte angeordneten Zugstreben verbunden sind und daß zwischen den anderen Armen der zweiarmigen Hebel, vorzugsweise bei deren Enden, mindestens eine Druckstrebe angeordnet ist, die der Kraft des Schließmechanismus entgegen wirkt.

Die erfindungsgemäße Konstruktion hat gegenüber einen Maschinenrahmen den Vorteil, daß es zwischen dem Rahmenbett und den Trägern für die feststehende Formträgerplatte und die Zylinderplatte zu keiner Kerbwirkung kommt. Ein wesentlicher Vorteil der erfindungsgemäßen Konstruktion gegenüber einer Maschine mit Rahmen ist die Gewerbeersparnis, wodurch auch größere Maschinen gebaut werden können. Änderungen der Formhöhe sind ebenfalls sehr einfch durchzuführen.

Nachfolgend wird ein Ausführungsbeispiel der Erfindung anhand der Figuren der beiliegenden Zeichnungen eingehend beschrieben.

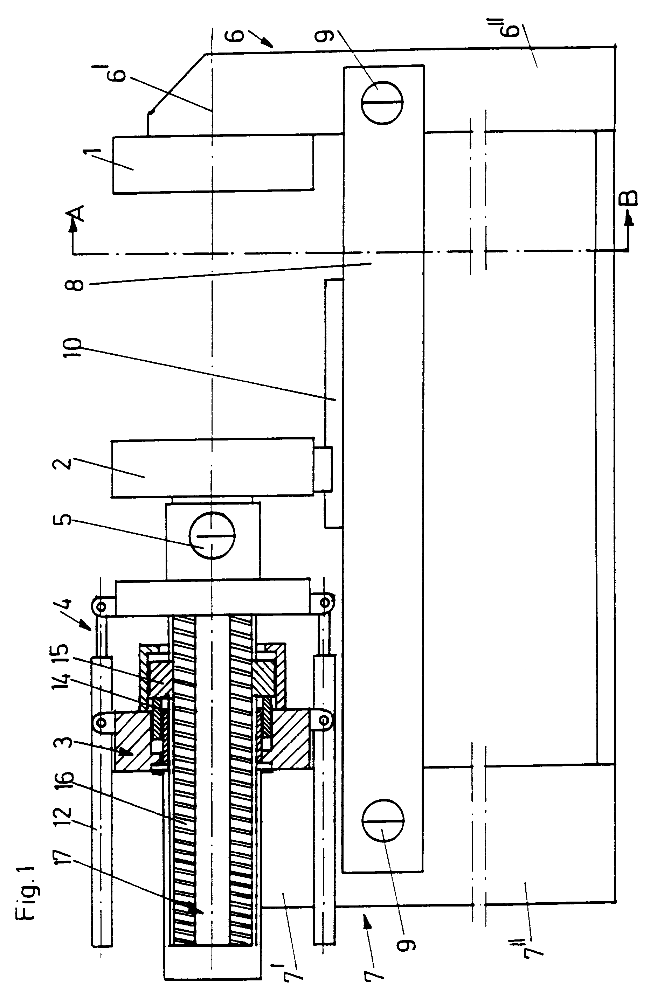

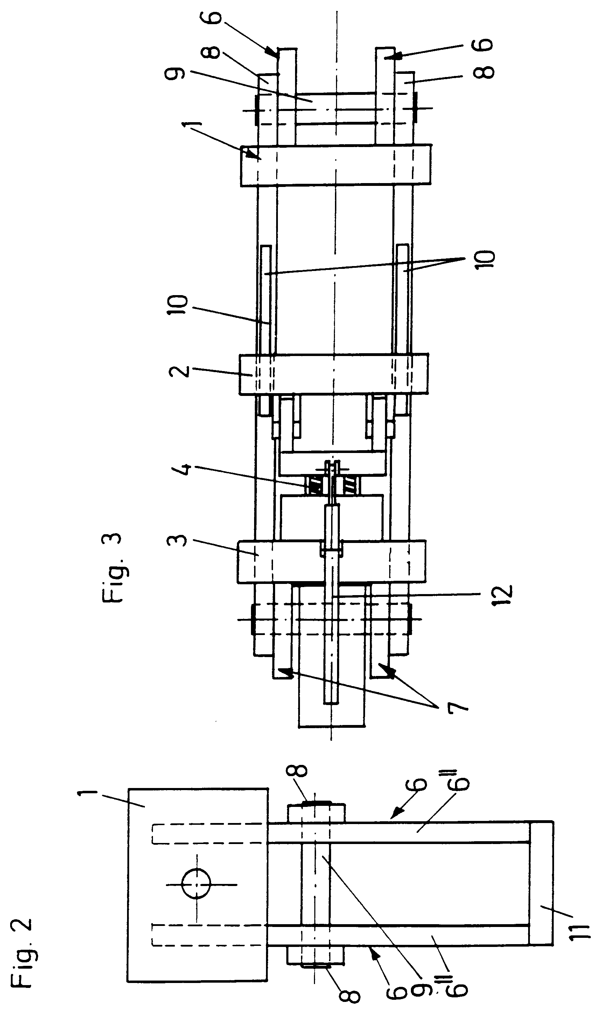

Die Fig. 1 zeigt eine schematisch gehaltene Seitenansicht einer erfindungsgemäßen Spritzgießmaschine, die Fig. 2 zeigt den Schnitt A-B der Fig. 1 und die Fig. 3 zeigt eine Draufsicht auf die erfindungsgemäße Spritzgießmaschine.

Die erfindungsgemäße Spritzgießmaschine weist in herkömmlicher Art und Weise eine feststehende Formträgerplatte 1, eine bewegbare Formträgerplatte 2 und eine feststehende Zylinderplatte 3 auf, an der sich der Schließmechanismus 4 abstutzt. Über den Schließmechanismus 4 wird die bewegbare Formträgerplatte 2 in die Schließ- und Offenstellung geführt. Die Formträgerplatte 2 ist über ein Gelenk 5 mit dem Schließmechanismus 4 verbunden.

An den beiden Enden der Spritzgießmaschine sind je zwei Endplatten 6, 7 angeordnet, die die gesamte Einheit tragen. An den Endplatten 6 ist die feststehende Formträgerplatte 1 befestigt und die Endplatten 7 tragen die Zylinderplatte 3 mit dem Schließmechanismus 4.

Es sind jeweils zwei Endplatten 6, 7 vorgesehen, die sich im Abstand voneinander verbinden.

Die Plattenpaare der Endplatten 6, 7 sind durch Zugstreben 8 miteinander verbunden.

Die Zugstreben 8 werden von Laschen aus Stahl oder Gußeisen gebildet, die mittels Verbindungsbolzen 9 an den Endplatten 6, 7 angelegt sind. Die Zugstreben 8 weisen einen flachen, rechteckigen Querschnitt auf und liegen seitlich an den Endplatten 6, 7 an.

Auf jeder Zugstrebe 8 ist eine Führungsschiene 10 für die bewegbare Formträgerplatte 2 angeordnet.

Die Endplatten 6, 7 sind als doppelarmige Hebel ausgebildet, wobei ein Arm 6', 7' die feststehende Formträgerplatte 1 bzw. die Zylinderplatte 3 trägt, während der zweite Arm 6'', 7'' die Stütze für die Spritzgießmaschine bildet. Zwischen den Armen 6'', 7'' ist in unmittelbarer Nähe des Bodens eine Druckstrebe 11 vorgesehen, die der Kraft des Schließmechanismus 4 entgegenwirkt. Die Druckstrebe 11 kann von einer oder mehreren Stahlstangen oder Profileisen gebildet werden. Vorzugsweise ist die Druckstrebe 11 mit den Armen 6'', 7'' der Endplatten 6, 7 verschweißt oder verschraubt, um die Stabilität zu erhöhen.

Es kann auch im Bereich der Druckstrebe 11 eine Längenausgleichsvorrichtung, wie ein Druckpolster od. dgl. vorgesehen sein, um einer Verformung während des Schließvorganges entgegenzuwirken.

Der Schließmechanismus 4 kann mit einem Schnellhub und mit einem Krafthub gefahren werden. Der Schnellhub wird mit den Schnellhubzylindern 12 gefahren. Anschließend wird Öl in den Krafthubzylinder 13 gepumpt und der Ringkolben 14 beaufschlagt. Der Ringkolben 14 bewegt dabei eine Mutter 15, die mit Gewindeabschnitten 16 eines Gewindebolzens 17, der das Gelenk 5 für die bewegbare Formträgerplatte trägt, verschraubt ist.

Die Mutter 15 weist ebenso in axialer Richtung verlaufende Gewindeabschnitte auf, wie die Gewindeabschnitte 16 des Gewindebolzens 17. Während des Schnellhubes befinden sich die Gewindeabschnitte der Mutter 15 neben den Gewindeabschnitten 16 des Gewindebolzens 17 und der Gewindebolzen 17 kann daher relativ zur Mutter 15 verfahren werden.

Ist der Schnellhub beim Schließen der Form beendet, wird die Mutter 15 verdreht, sodaß die Zähne der Gewinde der Gewindeabschnitte der Mutter 15 und der Gewindeabschnitte 16 des Gewindebolzens 17 miteinander in Eingriff gebracht werden. Anschließend wird, wie bereits gesagt, der Ringkolben 14 beaufschlagt und damit die Einheit Mutter 15, Gewindebolzen 17, Gelenk 5 und bewegbare Formträgerplatte 2 zur feststehenden Formträgerplatte 1 bewegt.

Zwischen die beiden Endplatten 6 ragt der Plastifizierzylinder der Einspritzeinheit.

## Patentansprüche

1. Spritzgießmaschine mit einer feststehenden und einer bewegbaren Formträgerplatte, sowie einer einen hydraulischen, elektromechanischen oder hydraulisch-mechanischen Schließmechanismus tragenden Zylinderplatte, an der die bewegbare Formträgerplatte abgestützt ist, wobei die Zylinderplatte und die feststehende Formträgerplatte über Zugstreben verbunden sind, dadurch gekennzeichnet, daß die Zylinderplatte (3) und die feststehende Formträgerplatte (1) jeweils an einem Arm (6', 7') eines zweiarmigen Hebels montiert sind, daß die zweiarmigen Hebel mittels der außerhalb der Formträgerplatte (1, 2) angeordneten Zugstreben (8) verbunden sind und daß zwischen den anderen Armen (6'', 7'') der zweiarmigen Hebel, vorzugsweise bei deren Enden, mindestens eine Druckstrebe (11) angeordnet ist, die der Kraft des Schließmechanismus (4) entgegen wirkt.

2. Spritzgießmaschine nach Anspruch 1, dadurch gekennzeichnet, daß die zweiarmigen Hebel von jeweils zwei zueinander parallelen Endplatten (6, 7) gebildet werden, die sich im Abstand voneinander befinden und zwischen denen an der Einspritzseite der Plastifizierzylinder und an der Schließseite der Schließmechanismus (4) angeordnet ist.

3. Spritzgießmaschine nach Anspruch 1 oder 2, dadurch gekennzeichnet, daß die Zugstreben (8) von metallischen Laschen gebildet werden, die seitlich an den Endplatten (6, 7) anliegen und über Verbindungsbolzen (9) mit diesen verbunden sind.

4. Spritzgießmaschine nach Anspruch 3, dadurch gekennzeichnet, daß jeweils ein Verbindungsbolzen (9) zwei Laschen (8) in zwei Endplatten (6, 7) verbindet.

5. Spritzgießmaschine nach Anspruch 1, dadurch gekennzeichnet, daß die Druckstrebe (11) bzw. Druckstreben mit den Endplatten (6, 7) verschweißt oder verschraubt ist bzw. sind.

6. Spritzgießmaschine nach mindestens einem der Ansprüche 1 bis 4, dadurch gekennzeichnet, daß auf den Zugstreben (8) Führungsschienen (10) für die bewegbare Formträgerplatte (2) angeordnet sind.
